# EUROPÄISCHE PATENTSCHRIFT

(11) **EP 1 600 650 B1**
(45) Veröffentlichungstag und Bekanntmachung des Hinweises auf die Patenterteilung: **21.06.2006**
(21) Anmeldenummer: 04012526.2
(22) Anmeldetag: 27.05.2004
(51) Int. Cl.: F16D 48/02

(54) **Hydraulische Betätigungseinrichtung für eine Kraftfahrzeugkupplung**
Hydraulic actuation for a vehicle clutch
Actuation hydraulique pour un embrayage d'automobile

(43) Veröffentlichungstag der Anmeldung: 30.11.2005
(73) Patentinhaber: ZF FRIEDRICHSHAFEN AG, 88046 Friedrichshafen (DE)
(72) Erfinder: Tulaczko, Boleslaw, 97453 Schonungen (DE)

(56) Entgegenhaltungen:
- WO-A-98/48212
- PATENT ABSTRACTS OF JAPAN Bd. 0120, Nr. 55 (M-669), 19. Februar 1988 (1988-02-19) & JP 62 200034 A (HINO MOTORS LTD), 3. September 1987 (1987-09-03)

## Beschreibung

Die Erfindung betrifft eine hydraulische Betätigungseinrichtung für eine Kraftfahrzeugkupplung gemäß dem Oberbegriff des Patentanspruchs 1.

Hydraulische Kupplungsbetätigungssysteme an Kraftfahrzeugen weisen die unerwünschte Eigenschaft auf, dass von der periodisch zündenden Brennkraftmaschine ausgelöste Axialschwingungen über die Reibungskupplung und deren Membranfeder auf das Kupplungsausrücklager und die damit verbundenen Ausrückeinrichtungen übertragen werden. Diese Axialschwingungen setzen sich fort in einem Hydraulikdruckraum, der durch einen Geber- und einen Nehmerzylinder, sowie einen diese verbindenden Hydraulikkanal begrenzt wird und können ein unangenehmes Kribbeln im Fuß eines Fahrzeugführers bei der Berührung des Kupplungspedals auslösen.

Die Druckpulsationen können einerseits bereits durch den Einsatz einer in Grenzen elastischen Druckleitung, beispielsweise aus einem Stahl-Gummi-Verbund, gedämpft werden. In Anwendungsfällen, wo diese Massnahme allein ungenügend ist, können in dem hydraulischen Betätigungssystem zusätzliche, als sogenannte Kribbelfilter ausgeführte hydraulische Dämpfungsglieder integriert werden. Ausserdem werden Stahl-Gummi-Leitungen zunehmend durch einfacher zu fertigende und kostengünstigere, vollständig aus einem Kunststoff gefertigte Druckleitungen ersetzt, welche bei einer Druckbelastung infolge einer Kupplungsbetätigung eine gegenüber dem vorgenannten Leitungstyp geringere Elastizität und damit eine geringere Volumenaufnahme aufweisen. In diesen Fällen ist der Einsatz eines hydraulischen Dämpfungsgliedes besonders wünschenswert.

Ein gattungsgemäßes Dämpfungsglied für eine hydraulische Kupplungsbetätigung ist mit der WO 2004/015290 A1 bekannt geworden, dessen Gehäuse einen sich zwischen zwei Steckkupplungselementen erstreckende Hauptkanal zum Anschluß an eine Hydraulikleitung und einen sich von einem Mittenbereich der erstgenannten seitlich abzweigenden Fluidanschluss zur Einmündung in eine Druckkammer des dort als Membranschwingungsdämpfer ausgebildeten Dämpfungsgliedes aufweist.

Es hat sich gezeigt, dass bei einem derartig ausgebildeten Betätigungssystem bzw. einem mit einem Abzweigkanal angeschlossenen Dämpfungsglied zwar eine Verbesserung gegenüber einem ungedämpften System zu verzeichnen ist, jedoch andererseits dennoch ein merklicher Anteil von Druckpulsationen auf den Geberzylinder übertragen und vom Fahrer als störend wahrgenommen wird.

Die gattungsbildende JP 62 200034 A offenbart ein Dämpfungsglied, welches an einer γ-förmigen Fluid-Verzweigung über ein separates Anschlußstück mit zwei spitzwinklig zueinander angeordneten Leitungsabschnitten eines Fluid-Hauptkanals verbunden ist. Auch bei diesem Dämpfungsglied kann ein Teil der Druckpulsationen ungehindert zum Geberzylinder gelangen.

Von dem genannten Stand der Technik ausgehend, ist es Aufgabe der vorliegenden Erfindung, die Wirkung eines Dämpfungsgliedes, welches über einen Abzweigkanal an einen Fluid-Hauptkanal angeschlossen ist, zu verbessern.

Die Erfindung löst die Aufgabe mit einer gattungsgemäßen hydraulischen Betätigungseinrichtung für eine Kraftfahrzeugkupplung mit den kennzeichnenden Merkmalen des Patentanspruchs 1.

Der Erfinder hat erkannt, dass Druckpulsationen, die sich von dem mit dem Antriebsstrang des Fahrzeuges in Verbindung stehenden Nehmerzylinder in Richtung des Geberzylinders ausbreiten, im Anschlußbereich des Dämpfungsgliedes aufgeteilt werden und zwar in eine erste, sich innerhalb des Dämpfungsgliedes abschwächende Pulsation und in eine zweite Pulsation, welche eine Schwingung des Kolbens im Geberzylinder anregt. Von dieser grundlegenden Erkenntnis ausgehend, wird vorgeschlagen, in dem Verbindungskanal Trennmittel anzuordnen, welche diesen in einen Einlass- und einen davon getrennten Auslasskanal teilen, womit eine direkte Strömungsverbindung zwischen dem Geber- und dem Nehmerzylinder weitestgehend unterbunden wird. Auf diese Weise wird eine sich im System ausbreitende Druckpulsation zunächst nahezu vollständig in das Dämpfungsglied umgelenkt und kann dort geschwächt werden. Diese Funktionalität entspricht damit derjenigen eines mit einem Einlass- und einem Auslassfluidanschluß zu dem Hauptkanal in Reihe angeordneten Dämpfungsgliedes.

Vorteilhafte Weiterbildungen und Ausgestaltungen der Erfindung sind in den abhängigen Ansprüchen formuliert.

Die Erfindung wird nachfolgend anhand der Beschreibung und der Figuren beispielhaft erläutert. Es zeigen:
- Fig. 1: eine schematische Darstellung einer hydraulischen Betätigungseinrichtung für eine Kraftfahrzeugkupplung mit einem darin angeordneten Dämpfungsglied,
- Fig.2a,b: Schnittdarstellungen von einteilig mit einer Hydraulikleitung ausgeführten Dämpfungsgliedern,
- Fig. 3: ein Dämpfungsglied mit zwei parallel zueinander angeordneten Membranen,
- Fig. 4: ein Dämpfungsglied, bei welchem die Membran durch eine Tellerfeder abgestützt wird,
- Fig. 5: eine vergrößerte perspektivische Darstellung eines an dem Dämpfungsglied der Fig. 2 angeordneten Fluid-Leitelementes.

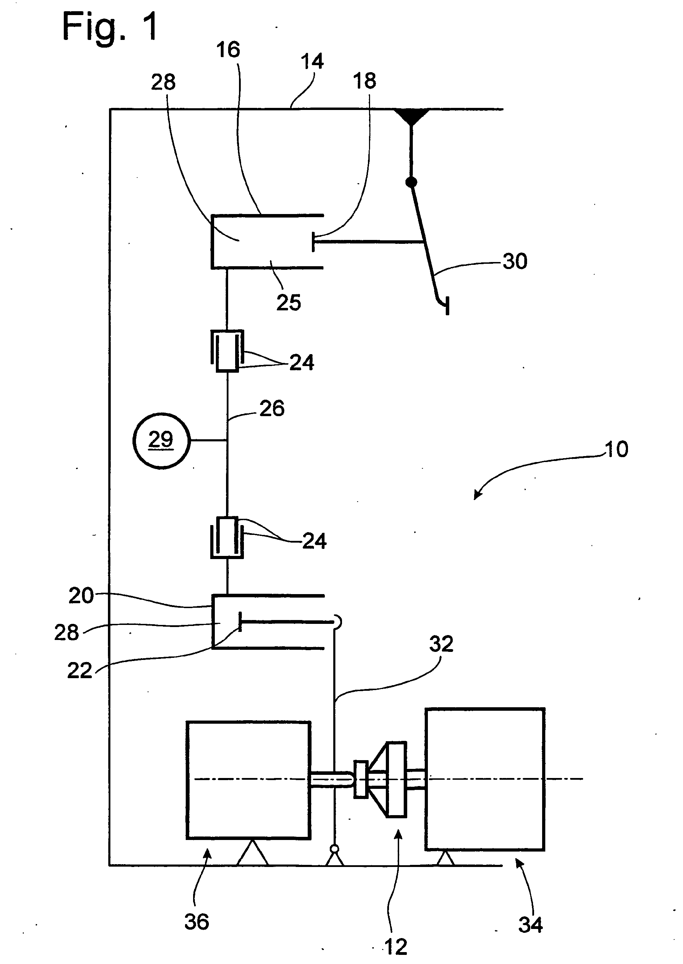

Gemäß Fig. 1 wird schematisch eine hydraulische Betätigungseinrichtung 10 zum Betätigen einer Kraftfahrzeugkupplung 12 gezeigt, welche an einem Chassis 14 eines Kraftfahrzeugs angeordnet ist und wobei ein Geberzylinder 16 mit einem Kolben 18 und ein Nehmerzylinder 20 mit einem Kolben 22 angeordnet sind, die miteinander über Steckkupplungen bzw. Hydraulikkupplungselemente 24 mit einer mit einem Fluid 25 befüllten Hydraulikleitung 26 verbunden sind und einen gemeinsamen Druckraum 28 ausbilden. Der Kolben 18 des Geberzylinders 16 kann durch ein Pedal 30 betätigt werden, woraufhin sich der Kolben 22 des Nehmerzylinders 20 verschiebt und eine Kupplungsgabel 32 zum Ausrücken der Kupplung 12 an einem als Verbrennungsmotor 34 ausgebildeten Antriebsaggregat steuert. Die Kupplung 12 ist eingangsseitig mit der Abtriebswelle des Verbrennungsmotors 34 und ausgangsseitig mit einem Schaltgetriebe 36 verbunden. Innerhalb der Hydraulikleitung 26 ist ein Dämpfungsglied 29 zur Dämpfung von Druckpulsationen vorgesehen, welches über einen Verbindungskanal 31 angeschlossen ist, der von einem Fluid-Hauptkanal 27 abzweigt. Das Dämpfungsglied 29 kann dabei einteilig, das heißt integral mit der Hydraulikleitung ausgeführt sein oder alternativ auch über Hydraulik-Kupplungselemente 24 mit dieser verbunden werden.

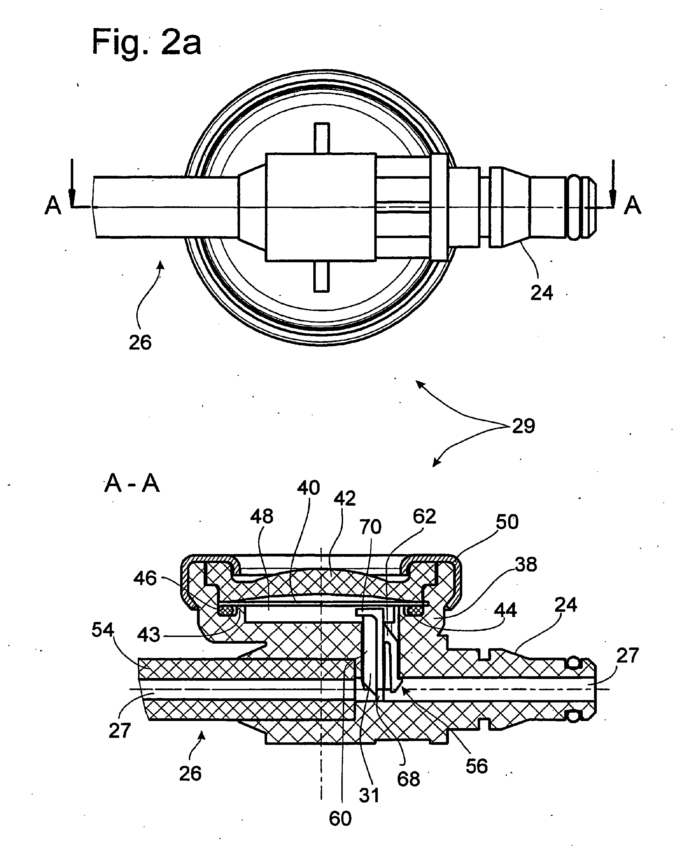

Fig. 2a zeigt ein als Membranschwinger ausgebildetes Dämpfungsglied 29, welches ein zylindrisches Gehäuse 38 mit einer darin stirnseitig angeordneten kreisförmigen Stahlblech-Membran 40 umfasst, die bei Druckpulsationen des Hydraulikfluids Schwingungen ausführen kann. Bei einem plötzlichen Druckanstieg kann sich die Membran kurzzeitig auswölben und dadurch ein zusätzliches Volumen bereitstellen, wodurch eine Druckpulsation gemildert werden kann. Die Membran 40 wird von einem Gehäusedeckel 42 gegen einen Ringsteg 43 gepresst und dichtet mit einer in einer Nut 44 liegenden O-Ringdichtung 46 eine Fluiddruckkammer 48 gegenüber der Atmosphäre ab. Der Deckel 42 wird von einer Umbördelung 50 an dessen Sitz gehalten. Die Innenfläche 52 des Deckels 42 ist konkav geformt, so dass sich die Membran 40 bei Erreichen eines maximal zulässigen Fluiddruckes an diese anschmiegen kann und eine Überdehung der Membran 40 und ggf. ein Bersten des Dämpfungsgliedes 29 vermieden werden kann.

Zur Herstellung einer Fluidverbindung zwischen der Hydraulikleitung 26 und dem Dämpfungsglied 29 ist ein freies Ende einer vorzugsweise aus dem Kunststoff PA 12 hergestellten Hydraulikleitung 26 mit einem an dieses Ende angespritzten Gehäuse 38 versehen und somit fluiddicht mit diesem verbunden. Das Gehäuse 38 besteht ebenfalls aus PA 12, jedoch ist dieses zusätzlich strukturell mit einem Faserwerkstoff, vorzugsweise Glasfasern verstärkt. Wesentlich ist, dass für die Hydraulikleitung 26 und das Gehäuse 38 eine geeignete, spritzbare Kunststoffpaarung Verwendung findet. Das andere, nicht dargestellte Ende der Hydraulikleitung 26 ist mit einem ersten Hydraulikkupplungselement 24 zur Verbindung mit dem Nehmerzylinder 20 versehen. Das Gehäuse 38 des Dämpfungsgliedes 29 ist einstückig mit einem zweiten Kupplungselement 24 zur Verbindung mit dem Geberzylinder 16 ausgebildet. Die Kombination des Gehäuses 38 mit einem Kupplungselement 24 erweist sich fertigungstechnisch als vorteilhaft, da diese Teile vorzugsweise auf der gleichen Werkstoffbasis beruhen und somit in einem Arbeitsgang hergestellt werden können.

Wie in Fig. 2a zu erkennen, verläuft der Fluid-Hauptkanal 27 von links kommend zunächst innerhalb der Hydraulikleitung 26 und geht dann in das Gehäuse 38 über, um anschließend über den Kupplungsstecker 24 auszutreten. Innerhalb des Gehäuses 38 zweigt vom Hauptkanal 27 ein Verbindungskanal 31 ab, der mit der Druckkammer 48 in Fluidverbindung steht und Druckpulsationen in diese einleiten kann. Der Verbindungskanal 31 ist so angeordnet, dass dieser in den Randbereich der Druckkammer 48 mündet, so dass bei einem vertikalen Einbau des Dämpfungsgliedes 29, d.h. bei einem vertikal ausgerichteten Hauptkanal 27 und nach oben gerichtetem Kupplungselement 24 auf diese Weise im Dämpfungsglied 29 befindliche Luftblasen leicht aus diesem entweichen können und das Betätigungssystem 10 vollständig entlüftet werden kann.

Alternativ zu dem Ausführungsbeispiel der Fig. 2a kann der Verbindungskanal 27 auch innerhalb der Hydraulikleitung 26 seitlich in deren Mantelbereich 54 oder auch in das Kupplungselement 24 münden.

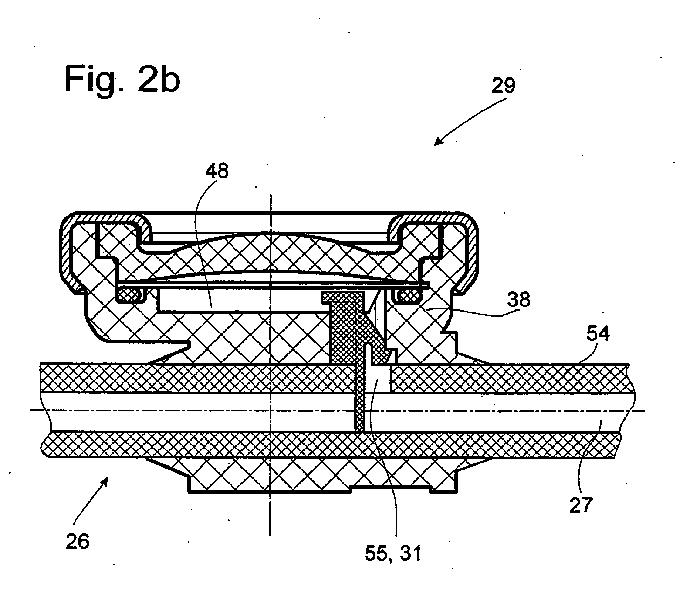

Das Dämpfungsglied 29 kann gemäß Fig. 2b auch an einer bereits beidseitig mit Kupplungselementen 24 konfektionierten Hydraulikleitung 26 an einer beliebigen, vorgebbaren Position angeordnet werden. Dazu wird der Mantel 54 der Hydraulikleitung 26 an dieser Position mit einer Öffnung 55 versehen und das Gehäuse 38 des Dämpfungsgliedes 29 an die Hydraulikleitung 26 angespritzt, wobei durch die geschaffene Mantelöffnung die Fluidverbindung, d.h. der Verbindungskanal 31 zu der Druckkammer 48 erzeugt wird. Bei dieser Ausführung ist somit die Hydraulikleitung 26 im Bereich des Dämpfungsgliedes 29 durchgehend ausgebildet.

Als weitere Möglichkeit zur Darstellung eines mit einer Hydraulikleitung 26 integrierten Dämpfungsgliedes 29 bietet es sich an, in einem ersten Schritt eine Hydraulikleitung 26 und ein separates Dämpfungsglied 29 herzustellen und beide Teile 26, 29 in einem zweiten Schritt fluiddicht miteinander zu verbinden, indem die Dichtungsstellen beispielsweise durch Einspritzen von Kunststoff oder durch ein Vulkanisieren eines Gummimaterials oder einer ähnlichen Dichtmasse erzeugt werden können.

Die Funktion des Dämpfungselementes 29 kann durch ein zumindest im Anschlußbereich des Verbindungskanals 31 an dem Hauptkanal 27 angeordnetes Fluid-Leitelement 56 erheblich verbessert werden, in dem dieses die Strömung im Fluid-Hauptkanal 27 beeinflusst und eine im Wesentlichen zum Dämpfungsglied 29 gerichtete Fluidströmung erzeugt. Das in Fig. 2a,b am Dämpfungsglied 29 dargestellte Fluid-Leitelement 56 dehnt sich hauptsächlich innerhalb des Verbindungskanals 31 aus und erstreckt sich beidseitig sowohl in den Hauptkanal 27 als auch in die Druckkammer 48 hinein.

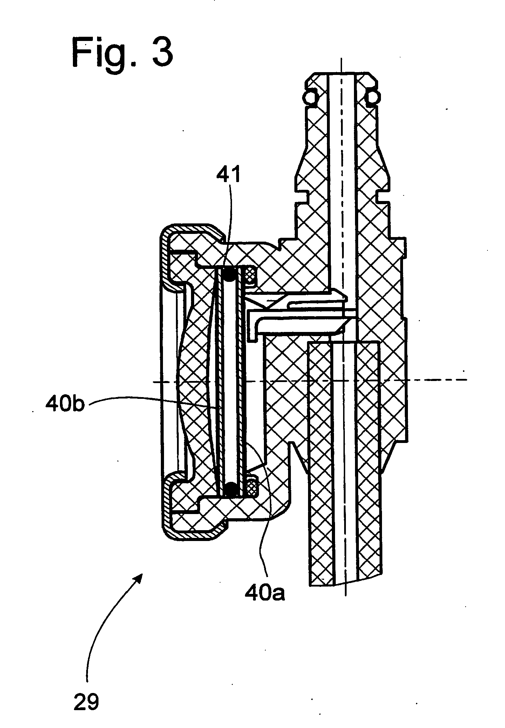

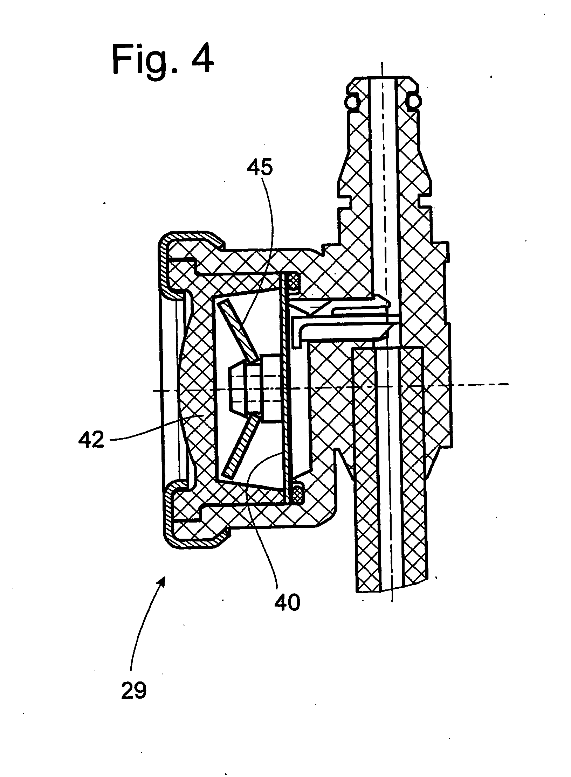

Anstelle von nur einer Membran 40 können gemäß Fig. 3 auch zwei oder mehrere, durch Distanzhalter 41 beabstandete Membranen 40a, 40b mit gleichen oder unterschiedlichen Steifigkeiten in der Druckkammer 48 plaziert werden, um damit das Dämpfungsverhalten gezielt an verschiedene Antriebsstrangkonfigurationen und/oder Druckbereiche optimal anzupassen. Weiterhin können, wie dieses Fig. 4 zeigt, auf der, der Druckkammer 48 abgewandten Seite, d.h. zwischen der Membran 40 und dem Deckel 42 auch Federmittel, bspw. in Form einer Tellerfeder 45 zur Erzeugung einer vom Ausmaß der Druckpulsationen abghängigen Gegenkraft und/oder zur Begrenzung der Auslenkungdes Membranschwingers 29 angeordnet werden. Die Tellerfeder 45 ist an einem an der Membran 40 angeordneten Verbindungselementes 47 verschnappt und weist zu diesem und/oder zu dem Deckel 42 einen Spielzwischenraum auf, um eine Verformung der Tellerfeder 45 aufzunehmen.

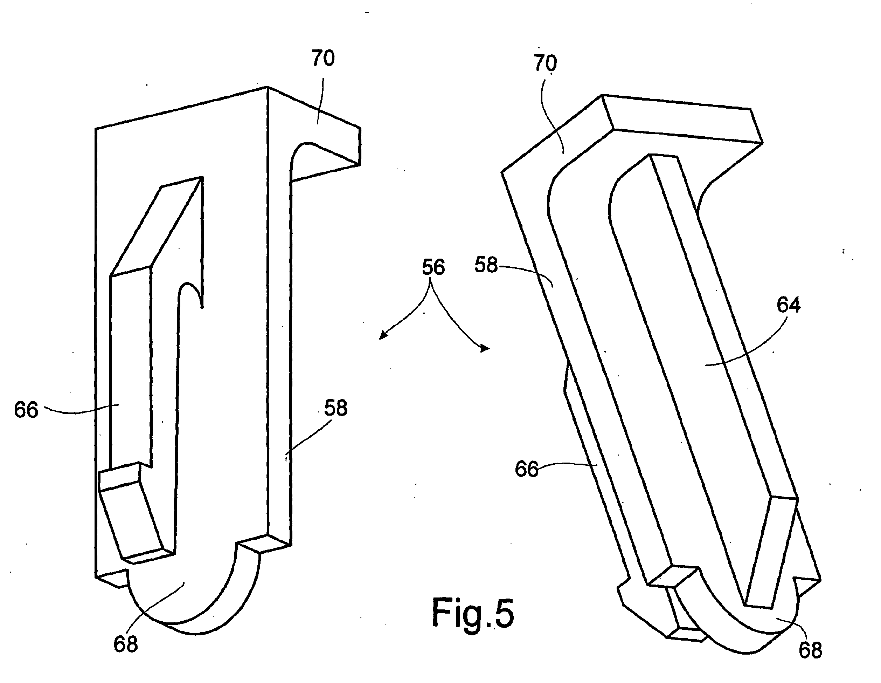

Fig. 5 zeigt ein separates, als Kunststoffspritzgussteil gefertigtes Fluid-Leitelement 56, welches als Basis eine L-förmigen Trennwand 58 aufweist, die den Verbindungskanal 31 je nach Strömungsrichtung in einen Einlass- 60 und einen Auslasskanal 62 unterteilt. Zur Fixierung des Fluid-Leitelementes 56 dienen zwei beidseitig von der Trennwand 58 abstehende, als Distanzhalter dienende Stege 64, 66, von denen einer als federnder Rasthaken 66 zur Herstellung einer Rastverbindung mit dem Verbindungs- 31 und dem Hauptkanal 27 ausgebildet ist. Ein in den Hauptkanal 27 hineinragender Endabschnitt 68 der Trennwand 58 ist als Halbkreisscheibe ausgebildet und liegt an der Innenwandung des Hauptkanals 27 an, um in diesem Bereich den ansonsten durchgehenden bzw. direkten Fluid-Hauptkanal 27 zwischen dem Geber- 16 und dem Nehmerzylinder 20 im Wesentlichen zu unterbrechen. Die Trennwand 58 ragt teilweise in die Druckkammer 48 hinein und weist als oberen Abschluss eine etwa parallel zu der Membran 40 ausgerichtete Abwinkelung 70 auf, durch welche das einströmende Fluid vorzugsweise lateral in der Druckkammer 48 geführt und dabei verwirbelt wird. Um die Verweildauer des Fluids in der Druckkammer 48 zu erhöhen, kann das Fluid-Leitelement 56 weitere Trennwand- bzw. Leitanordnungen aufweisen, bspw. einen von dem Distanzhalter 64 senkrecht abstehenden Steg o.ä.

Das beschriebene Fluid-Leitelement 56 lenkt den beispielsweise vom Nehmerzylinder 20 eintreffenden Fluidstrom im Hauptkanal 27 zur Erzeugung einer in das Dämpfungsglied 29 gerichteten Fluidströmung ab. Diese Strömung wird von der im Verbindungskanal 31 angeordneten Trennwand 58 von einer aus dem Dämpfungsglied 29 heraus in Richtung des Geberzylinders 16 fließenden Strömung ferngehalten und schließlich von dem in der Druckkammer 48 angeordneten Bereich auf einen Strömungsweg gezwungen, dessen Länge um ein Mehrfaches größer ist als der gegenseitige Abstand von Einlass- 60 und Auslasskanal 62, um die Druckkammer 48 über den Auslasskanal 62 wieder zu verlassen.

Die beschriebenen Strömungsbeeinflussungs- Leit- und Trennmittel können alternativ auch einzeln, d.h. separat an der Hydraulikleitung, dem Verbindungskanal und der Druckkammer ausgeführt sein.

Es soll schließlich erwähnt werden, dass das bspw. in Fig. 2a,b dargestellte Dämpfungsglied 29 mit zwei oder mehreren Druckkammern 48, die jeweils mit einem Verbindungskanal 31 an dem Hauptkanal 27 angeordnet sind, ausgebildet werden kann. Die einzelnen Druckkammern 48 können im Hauptkanal parallel angeordnet sein, was bedeutet, dass alle Druckkammern 48 gleichrangig und gleichzeitig von einer sich ausbreitenden Druckpulsation beaufschlagt werden. Andererseits ist auch eine serielle Anordnung von Druckkammern 48 denkbar, welche bspw. durch in Strömungsrichtung am Hauptkanal versetzt angeordnete Verbindungskanäle 31 realisiert werden kann. In diesem Fall durchläuft eine Druckpulsation die einzelnen Druckkammern 48 nacheinander, wobei diese auf deren Strömungsweg zunehmend geschwächt wird.

### Bezugszeichenliste

- 10: hydraul. Betätigungseinrichtung
- 12: Kraftfahrtzeugkupplung
- 14: Chassis
- 16: Geberzylinder
- 18: Kolben
- 20: Nehmerzylinder
- 22: Kolben
- 24: Steckkupplung
- 25: Hydraulikfluid
- 26: Hydraulikleitung
- 27: Fluid-Hauptkanal
- 28: Druckraum
- 29: Dämpfungsglied
- 30: Pedal
- 31: Verbindungskanal
- 32: Kupplungsgabel
- 34: Verbrennungsmotor
- 36: Schaltgetriebe
- 38: Gehäuse
- 40: Membran
- 41: Distanzhalter
- 42: Gehäusedeckel
- 43: Ringsteg
- 44: Nut
- 45: Tellerfeder
- 46: Dichtung
- 47: Verbindungselement
- 48: Fluiddruckkammer
- 50: Umbördelung
- 52: Innenfläche
- 54: Mantelbereich
- 56: Fluid-Leitelement
- 58: L-förmige Trennwand
- 60: Einlasskanal
- 62: Auslasskanal
- 64: Steg
- 66: Rasthaken
- 68: Endabschnitt
- 70: Abwinkelung

## Patentansprüche

1. Hydraulische Betätigungseinrichtung (10) für eine Kraftfahrzeugkupplung (12), welche einen Geberzylinder (16) mit einem Kolben (18) und einen mit diesem über einen Fluid-Hauptkanal (27) verbundenen Nehmerzylinder (20) mit einem Kolben (22) umfasst, wobei die vorgenannten Elemente einen Druckraum (28) bilden, in welchem über mindestens einen von dem Fluid-Hauptkanal (27) abzweigenden Verbindungskanal (31) ein Dämpfungsglied (29) zur Abschwächung von Druckschwingungen angeordnet ist, wobei im Anschlußbereich des Verbindungskanals (31) an dem Fluid-Hauptkanal (27) Strömungsbeeinflussungsmittel (68) zur Erzeugung einer im Wesentlichen zum Dämpfungsglied (29) gerichteten Fluidströmung ausgebildet sind,
**dadurch gekennzeichnet,**
**dass** der Verbindungskanal (31) Trennmittel (58) umfasst, welche diesen in einen Einlass- (60) und einen davon getrennten Auslasskanal (62) teilen.

2. Hydraulische Betätigungseinrichtung nach Anspruch 1,
**dadurch gekennzeichnet,**
**dass** eine Druckkammer (48) des Dämpfungsgliedes (29) Leitmittel (58, 70) umfasst, welche einen Strömungsweg für einen über den Einlasskanal (60) in die Druckkammer (48) eingeleitete Fluidströmung vorgibt, dessen Länge größer ist als der gegenseitige Abstand von Einlass- (60) und Auslasskanal (62).

3. Hydraulische Betätigungseinrichtung nach Anspruch 2,
**dadurch gekennzeichnet,**
**dass** die Strömungsbeeinflussungsmittel (68), die Trennmittel (58) und die Leitmittel (58, 70) gemeinsam an einem Fluid-Leitelement (56) ausgeführt sind.

4. Hydraulische Betätigungseinrichtung nach Anspruch 3,
**dadurch gekennzeichnet,**
**dass** der Verbindungskanal (31) in einem Randbereich der Druckkammer (48) des Dämpfungsgliedes (29) mündet.

5. Hydraulische Betätigungseinrichtung nach einem der vorhergehenden Ansprüche,
**dadurch gekennzeichnet,**
**dass** das Dämpfungsglied (29) einteilig mit einer Hydraulikleitung (26) ausgeführt ist.

## Claims

1. Hydraulic actuator (10) for a motor vehicle clutch (12), which comprises an input cylinder (16) having a piston (18), and an output cylinder (20) having a piston (22) and connected to the former cylinder by way of a main fluid duct (27), the aforementioned elements forming a pressure chamber (28), in which a damping member (29) is arranged for attenuating pressure fluctuations by way of at least one connecting duct (31) branching off from the main fluid duct (27), flow-influencing means (68) being formed in the area adjoining the connecting duct (31) to the main fluid duct (27) for generating a fluid flow directed substantially towards the damping member (29), **characterized in that** the connecting duct (31) comprises dividing means (58) which divide said duct into an inlet duct (60) and an outlet duct (62) separated from the former.

2. Hydraulic actuator according to Claim 1, **characterized in that** a pressure chamber (48) of the damping member (29) comprises baffles (58, 70), which determine a flow path for a fluid flow introduced into the pressure chamber (48) by way of the inlet duct (60), and the length of which is greater than the mutual distance separating the inlet duct (60) and the outlet duct (62).

3. Hydraulic actuator according to Claim 2, **characterized in that** the flow-influencing means (68), the dividing means (58) and the baffles (58, 70) are formed together on a fluid baffle element (56).

4. Hydraulic actuator according to Claim 3, **characterized in that** the connecting duct (31) opens into an edge area of the pressure chamber (48) of the damping member (29).

5. Hydraulic actuator according to any one of the preceding claims, **characterized in that** the damping member (29) is integrally formed with a hydraulic line (26).

## Revendications

1. Actionneur hydraulique (10) pour un embrayage de véhicule automobile (12), qui comprend un maître-cylindre (16) avec un piston (18) et un cylindre récepteur (20) avec un piston (22) connecté avec celui-ci par le biais d'un canal fluidique principal (27), les éléments susmentionnés formant un espace de pression (28) dans lequel un organe d'amortissement (29) est disposé pour affaiblir les oscillations de pression par le biais d'au moins un canal de connexion (31) partant du canal fluidique principal (27), des moyens d'influence de l'écoulement (68) pour produire un écoulement fluidique orienté essentiellement vers l'organe d'amortissement (29) étant réalisés dans la région de raccordement du canal de connexion (31) au canal fluidique principal (27),
**caractérisé en ce que**
le canal de connexion (31) comprend des moyens de séparation (58) qui le divisent en un canal d'entrée (60) et un canal de sortie (62) séparé de celui-ci.

2. Actionneur hydraulique selon la revendication 1,
**caractérisé en ce qu'**
une chambre de pression (48) de l'organe d'amortissement (29) comprend des moyens de guidage (58, 70) qui prédéfinissent une course d'écoulement pour un écoulement fluidique introduit par le biais du canal d'entrée (60) dans la chambre de pression (48), dont la longueur est supérieure à la distance mutuelle du canal d'entrée (60) et du canal de sortie (62).

3. Actionneur hydraulique selon la revendication 2,
**caractérisé en ce que**
les moyens d'influence de l'écoulement (68), les moyens de séparation (58) et les moyens de guidage (58, 70) sont réalisés en commun sur un élément de guidage de fluide (56).

4. Actionneur hydraulique selon la revendication 3,
**caractérisé en ce que**
le canal de connexion (31) débouche dans une région de bord de la chambre de pression (48) de l'organe d'amortissement (29).

5. Actionneur hydraulique selon l'une quelconque des revendications précédentes,
**caractérisé en ce que**
l'organe d'amortissement (29) est réalisé d'une seule pièce avec une conduite hydraulique (26).
